(19) Europäisches Patentamt
European Patent Office
Office européen des brevets

(11) Publication number: **0 247 206 B1**

(12) # EUROPEAN PATENT SPECIFICATION

(45) Date of publication of patent specification: **22.01.92**

(51) Int. Cl.5: **H02P 5/00**, G05B 11/32, G05B 13/04, G05D 13/62

(21) Application number: **86906946.8**

(22) Date of filing: **26.11.86**

(86) International application number:
**PCT/JP86/00601**

(87) International publication number:
**WO 87/03432 (04.06.87 87/12)**

(54) **SPEED CONTROL SYSTEM.**

(30) Priority: **27.11.85 JP 266616/85**

(43) Date of publication of application:
**02.12.87 Bulletin 87/49**

(45) Publication of the grant of the patent:
**22.01.92 Bulletin 92/04**

(84) Designated Contracting States:
**DE FR GB**

(56) References cited:
**JP-A-59 206 902**
**JP-A-60 200 788**

(73) Proprietor: **FANUC LTD.**
**3580, Shibokusa Aza-Komanba, Oshino-mura**
**Minamitsuru-gun, Yamanashi 401-05(JP)**

(72) Inventor: **KURAKAKE, Mitsuo**
**Izumi-Haitsu 103 3-10, Tamadaira 3-chome**
**Hino-shi Tokyo 191(JP)**
Inventor: **SAKAMOTO, Keiji**
**Fuyou-Haitsu 102 65-4, Takakura-cho**
**Hachioji-shi Tokyo 192(JP)**

(74) Representative: **Billington, Lawrence Emlyn et al**
**Haseltine Lake & Co Hazlitt House 28, Southampton Buildings Chancery Lane**
**London WC2A 1AT(GB)**



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

The present invention relates to a system for controlling the speed of a servomotor, and more particularly to a speed control system for a servomotor suitable for driving a load of low rigidity.

Industrial robots have a plurality of arms coupled to provide high freedom for performing a variety of operations. Since the coupled arms are in the form of a long cantilever, or due to the characteristics of a power transmission mechanism between the arms and a servomotor, the arms are inevitably of a low degree of rigidity. Regardless of being such a mechanical load of low rigidity, the industrial robot is required to have an increased operation speed and an increased operation range and to effect highly accurate positioning in order to increase its working capability.

In order to ideally control a speed control system employing a DC motor for controlling a conventional mechanical load of low rigidity, e.g., robot arms, there has been proposed a speed control system as illustrated in Fig. 2 of the accompanying drawings. Denoted in Fig. 2 at $K_1$ is an integration constant, $K_2$, $K_3$, $K_4$ proportionality constants, Kt a power amplifier constant, Jm a rotor inertia, $J_L$ a load inertia, and K a spring constant of a rotor and load coupling. The ratio (transfer function) between an input signal Vr and an output signal, e.g., a speed Vl of the distal end of a robot hand, which is supplied as a feedback signal to a speed control integrator, is calculated by the following equation:

$$Vl/Vr = K_1 \cdot Kt/\{K_1 \cdot Kt + (K_2 + K_3)Kt \cdot S + (Jm + J_L + K_4 \cdot Kt \cdot J_L)\, S^2 + K_3 \cdot Kt(J_L/K)\, S^3 + Jm(J_L/K)\, S^4\} \quad (1)$$

According to the equation (1), the coefficients of the terms of the linear differential S (= d/dt), the quadratic differential $S^2$, the third differential $S^3$ in the denominator are the products of only the proportionality constants $K_2$, $K_3$, $K_4$. Therefore, it is easy to vary these coefficients freely thereby to stabilize the speed control system. In the d.c. term, too, only the integration constant $K_1$ can freely be varied, independent of the proportionality constants $K_2$, $K_3$, $K_4$, to increase quick response and provide against disturbance applied to a position control system.

Actually, however, an observer is used when producing the displacement of a mechanical feed system or a speed signal at the distal end of the hand, and since the observer contains a greater or lesser error, it is difficult to obtain an accurate feedback signal. Heretofore, therefore, a motor speed Vm is usually fed back to the integrator. In this case, the relationship between the motor speed Vm and the speed Vl of the distal end of the hand is expressed, using the spring constant K, by:

$$Vm = \{I + (J_L \cdot S^2)/K\}Vl \quad (2)$$

The transfer function is thus given as follows:

$$Vl/Vr = (K_1 \cdot Kt)/[K_1 \cdot Kt + (K_2 + K_3)Kt \cdot S + \{Jm + J_L + K_4 \cdot Kt \cdot J_L + (K_1 \cdot Kt \cdot J_L)/K\}S^2 + K_3 \cdot Kt \cdot (J_L/K)S^3 + Jm \cdot (J_L/K)S^4] \quad (3)$$

Consequently, the coefficients of the quadratic differential $S^2$ include two coefficients, i.e., the proportionality constant $K_4$ and the integration constant $K_1$, thereby making it difficult to stably adjust the mechanical load of low rigidity.

More specifically, the time constant of the position control system is determined by the ratio of the coefficients of the term of the linear differential and the d.c. term, and is expressed by:

$$\{(K_2 + K_3)Kt\}/K_1 \cdot Kt = (K_2 + K_3)/K_1 \quad (2)$$

By suitably selecting the value of the integration constant $K_1$ with respect to $(K_2 + K_3)$, the speed control system is allowed to effect accurate operation. However, since the proportionality constant $K_4$ is included in the term of the quadratic differential, the position control system cannot be balanced when selecting the value of $K_1$ in relation to $(K_2 + K_3)$, resulting in the problem of impaired stability.

JP-A-59 206 909 discloses a speed control system for a robot arm, in accordance with the precharacterising part of attached claim 1.

The present invention eliminates or reduces the problems of the conventional speed control system. It is an object of the present invention to provide a speed control system capable of stable positional control without impairing quick response in a speed control loop by feeding back a speed signal issued from an observer as approximate data from a mechanical load, together with a motor speed, to a speed control integration means.

According to the present invention, there is provided a speed control system for controlling a servo control system with a command speed and a fed-back speed signal from a mechanical load, the speed control system comprising a servomotor for driving the mechanical load of low rigidity, means for detecting the speed of the servomotor, means for generating a speed signal from the mechanical load, first integrator means to which a speed signal of the servomotor is fed back, second integrator means to which the speed signal of the mechanical load is fed back, and means for determining a transfer function of the servo control system from the first and second integrator means, the speed of said mechanical load being a value estimated by an observer from an output torque of the servomotor and a positional signal of the servomotor.

With the present invention, the speeds of the servomotor and the mechanical load are fed back to the respective integrators in the servo control system for effecting stable servo control, employing an observer as stated.

Brief Description of the Drawings

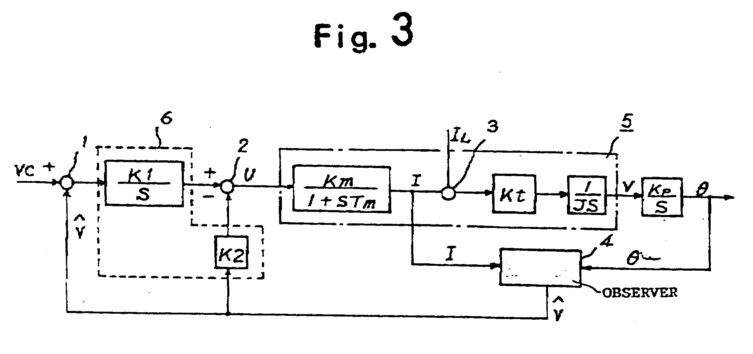

Fig. 1 is a block diagram of an embodiment which can be rendered in accordance with the present invention by employing the observer of Fig 3; Fig. 2 is a block diagram of a previously proposed servo control system in which the speed of a distal end of a mechanical load is fed back for control; and Fig. 3 is a block diagram explaining the principles for estimating a speed with an observer.

An embodiment of the present invention will hereinafter be described in specific detail with reference to the drawings.

Fig. 1 is a block diagram of a speed control system which can be rendered according to the present invention by employing the observer of Fig 3. In Fig. 1 a servo control system has separately an integrator A to which a motor speed Vm is fed back and an integrator B to which a speed Vl of a distal end of a mechanical load is fed back. Assuming that $K_1$ indicates an integration constant with respect to a motor speed and $K_5$ indicates an integration constant with respect to a mechanical load speed, a transfer function as it is enlarged with respect to two signals indicative of the motor speed and the mechanical load speed is expressed as follows:

$$Vl/Vr = (K_1 + K_5)Kt/[(K_1 + K_5)\bullet Kt + (K^2 + K^3)KtS + \{Jm + Jl + (K_1\bullet Kt\bullet Kl/K)\}S^2 + (K_3\bullet Kt\bullet Kl/K)\}S^3 + (Jm\bullet Jl/K)S^4] \quad (3)$$

A transfer function as it is enlarged with respect to the mechanical load speed is as follows, with Km being an integration constant with respect to the load speed:

$$Vl/Vr = Km\bullet Kt/\{Km\bullet Kt + (K_2 + K_3)\ Kt\bullet S + (Jm + Jl + (K_4\bullet Kt\bullet Jl/K))S^2 + (K_3\bullet Kt\bullet Jl/K)\}S^3 + (Jm\bullet Jl/K)\text{-}S^4\} \quad (4)$$

Since the coefficients of the linear differential and the third differential are the same in the equations (3) and (4), the integration constants $K_1$, $K_5$ should be determined so that

$$K_1 + K_5 = Km \quad (5)$$

can be met in order to equalize the coefficients except for the term of the quadratic differential. At this time, the control system is balanced.

The coeffiecients should be selected so that the denominator will coincide with the Butterworth pattern with respect to the enlarged type for the load speed. The Butterworth pattern is represented by:

[1, 1, 0.5, 0.15, 0.03, 0.003, ... ] (6)

Since the coefficient of the term of the quadratic differential can freely be changed by the proportionality constant $K_4$, the following equations can be established with respect to the coefficients of the terms of the linear, third, and fourth differentials:

$$S : G_1 = (K_2 + K_3)/Km = \sigma \quad (7)$$

$S^3 : G_3 = (K_3 \cdot J)/(K \cdot Km) = 0.15\sigma^3$ (8)

$S^4 : G_4 = (l/Km \cdot Kt)(Jm \cdot Jl/K) = 0.03\sigma^4$ (9)

At this time, the coefficient of the quadratic differential of the enlarged transfer function with respect to the two outputs, i.e., the motor speed and the load speed is given by:

$S^2 : G_2 = \{l/(K_1 + K_5)Kt\}\{Jm + Jl + (K_1 \cdot Kt \cdot Kl)/K\} = \{(Jm + Jl)/(Km \cdot Kt)\} + (Kl \cdot Jl)/(Km \cdot K)$ (10)

Since $(l/Km \cdot Kt) \cdot (Jm \cdot Jl/K) = 0.03\sigma^4$ from the equation (9),

$G_2 = \{K \cdot (Jm + Jl)/(Jm \cdot Jl)\} \times 0.03\sigma^4 + (K_1/Km) \cdot (Jl/K)$ (11)

If $\omega n^2 = \{K \cdot (Jm + Jl)/(Jm \cdot Jl)\}$ (12)

and assuming that

$Jm = Jl$ (13)

$\omega n^2 = (2 \cdot K)/Jl$ (14)

Therefore,

$G_2 = \omega n^2 \times 0.03\sigma^4 + (K_1/Km) \cdot (2/\omega n^2) = \omega n^2 \times 0.03\sigma^2 + (K_1/Km) \cdot (2/\omega n^2\sigma^2)\}\sigma^2$ (15)

If $\omega n^2\sigma^2 = \alpha$ (16)

then

$G_2 = \{0.03\alpha + (K_1/Km)(2/\alpha)\}\sigma^2$ (17)

If, for example, $\sigma = 5.3 \times 10^{-3}$, $Wn = 2\pi \times 8$, then the Butterworth coefficient $BW_2$ is calculated as follows:

$BW_2 = 2.12 \times 10^{-3} + (K_1/Km) \times 28.18$ (18)

As the speed of the distal end of the mechanical load, there may be employed a value estimated by an observer from the output torque of the motor and the position of the motor. The process of estimating the speed with the observer has been proposed in Japanese Laid-Open Patent Publication No. 60-200788 filed by the present applicant. The process of estimating the speed with the observer will be described with reference to the block diagram of Fig. 3. Designated at 1, 2, 3 are calculating units, 4 an observer, 5 a motor, 6 an I-P controller, $\theta$ a position of the motor, V a speed of the motor, U a torque command, I a motor current, and $\hat{V}$ an estimated speed value. Operation of this control system will be described below.

The difference between a speed command value and an estimated speed value $\hat{V}$, described later, is issued from the calculating unit 1. The output signal from the caculating unit 1 is integrated and then applied to the calculating unit 2. The estimated speed value $\hat{V}$ as multiplied by a feedback gain $K_2$ is applied to the calculating unit 2. The difference between the input signals applied to the calculating unit 2 is issued as a torque command U for controlling the motor 5. The speed of the motor is issued as V, and the position $\theta$ of the motor is detected by a rotary encoder. Information of the position $\theta$ includes a current $I_L$ indicative of a load torque (coulomb friction) and added by the caculating unit 3.

Where the observer 4 is used to obtain an estimated speed value, a load torque which is responsible for a normal estimation error is simultaneously estimated. More specifically, the motor current I and the positional information $\theta$ taking into account $I_L$ representing the load torque are applied to the observer 4, which then issues the estimated speed value $\hat{V}$.

The above process will be described in greater detail. A unidimensional observer constructed of the motor current I, the speed V, the position $\theta$, and the current $I_L$ based on the load torque is given as follows:

$$\begin{bmatrix} \dot{\theta} \\ V \\ I_L \end{bmatrix} = \begin{bmatrix} 0 & Kp & 0 \\ 0 & 0 & -Kt/J \\ 0 & 0 & 0 \end{bmatrix} \begin{bmatrix} \theta \\ V \\ I_L \end{bmatrix} + Kt/J \begin{bmatrix} 0 \\ 1 \\ 0 \end{bmatrix} I$$

The motor current I and the position $\theta$ are actually detected and applied to the observer 4. A unidimensional observer for digital processing is given by:

$$\begin{bmatrix} \hat{\theta}n+1 \\ \hat{V}n+1 \\ \hat{I}_L n+1 \end{bmatrix} = \begin{bmatrix} 1-\lambda_1 & KpT & \frac{-KpKt}{2J}T^2 \\ -\lambda_2 & 1 & \frac{-Kt}{J}T^2 \\ -\lambda_3 & 0 & 1 \end{bmatrix} \begin{bmatrix} \hat{\theta}n \\ \hat{V}n \\ \hat{I}_L n \end{bmatrix} + \begin{bmatrix} \lambda_1 \\ \lambda_2 \\ \lambda_3 \end{bmatrix} \theta + \frac{Kt}{J} \begin{bmatrix} \frac{Kp}{2}T^2 \\ T \\ 0 \end{bmatrix} I$$

where T is a sampling period, and $\lambda_1$, $\lambda_2$, $\lambda_3$ are observer gains which are in inverse proportion to a time in which the estimated value converges to a real value.

The above observer is realized by the following algorithm in order to process the same with a microprocessor:

$$\Delta\hat{\theta}m+1 = \lambda_1 \sum_{j=0}^{m} (\Delta\theta j - \Delta\hat{\theta} j) + KpT\hat{V}m + \frac{KpKT}{2J}T^2 (Im - \hat{I}_L m)$$

$$\hat{V}m+1 = \hat{V}m + \lambda_2 \sum_{j=0}^{m} (\Delta\theta j - \Delta\hat{\theta} j) + \frac{KtT}{J}(Im - \hat{I}_L m)$$

$$\hat{I}_L m+1 = \hat{I}_L m + \lambda_3 \sum_{j=0}^{m} (\Delta\theta j - \Delta\hat{\theta} j)$$

Since the speed can be estimated by the observer, it is apparent that the machine speed can also be estimated in the control system as shown in Fig. 1.

According to the embodiment as described above, the speed of a motor and the speed of a distal end of a machine are fed back respectively to individual integrators in a servo system for speed control in a system for controlling a mechanical load of low rigidity such as a robot hand or the like. Therefore, the speed control system is quick in response and highly stable, and is preferably used in a speed control system for controlling a servomotor for driving a load of low rigidity.

## Claims

**1.** A speed control system for controlling a servo control system with a command speed and a fed-back speed signal from a mechanical load, said speed control system comprising:

a servomotor (5) for driving the mechanical load of low rigidity;

means for detecting the speed (Vm) of said servomotor;

means for generating a speed signal (Ve) from said mechanical load;

first integrator means (A) to which a speed signal of said servomotor is fed back;

second integrator means (B) to which the speed signal of said mechanical load is fed back; and

means for determining a transfer function of the servo control system from the first and second integrator means (A,B),

characterised in that

the speed of said mechanical load is a value estimated by an observer (4) from an output torque of said servomotor (5) and a positional signal ($\theta$) of said servomotor (5).

## Revendications

1. Un système de régulation de vitesse pour la régulation d'un système de servo-commande avec un signal de vitesse de commande et un signal de vitesse de contre-réaction provenant d'une charge mécanique, ledit système de régulation de vitesse comprenant :

   un servo-moteur (5) pour entraîner la charge mécanique de faible rigidité ;

   des moyens pour détecter la vitesse (Vm) dudit servo-moteur ;

   des moyens pour former un signal de vitesse (Vl) à partir de ladite charge mécanique ;

   un premier moyen intégrateur (A) auquel un signal de vitesse dudit servo-moteur est appliqué en contre-réaction ;

   un second moyen intégrateur (B) auquel le signal de vitesse de ladite charge mécanique est appliqué en contre-réaction ; et

   des moyens pour déterminer une fonction de transfert du système de servo-commande à partir des premier et second moyens intégrateurs (A, B),

   caractérisé en ce que

   la vitesse de ladite charge mécanique est une valeur estimée par un observateur (4) à partir du couple de sortie dudit servo-moteur (5) et d'un signal de position (O) dudit servo-moteur (5).

## Patentansprüche

1. Geschwindigkeits-Regelungssystem zum Regeln eines Servosteuersystems mit einem Signal für eine befohlene Geschwindigkeit und einem Geschwindigkeits-Rückkopplungssignal von einer mechanischen Last, welches Geschwindigkeits-Regelungssystem umfaßt:
   einen Servomotor (5) zum Teiben einer mechanischen Last niedriger Starrheit,
   ein Mittel zum Erfassen der Drehzahl (Vm) des Servomotors,
   ein Mittel zum Erzeugen eines Geschwindigkeitssignals (Ve) von der mechanischen Last,
   einen ersten Integrator (A), auf den ein Drehzahlsignal des Servomotors zurückgekoppelt wird,
   einen zweiten Integrator (B), auf den das Geschwindigkeitssignal der mechanischen Last zurückgekoppelt wird, und
   ein Mittel zum Bestimmen einer Übertragungsfunktion des Servosteuersystems von dem ersten und dem zweiten Integrator (A, B),
   dadurch **gekennzeichnet,** daß
   die Geschwindigkeit der mechanischen Last ein Wert ist, der durch einen Beobachter (4) aus einem Ausgangsdrehmoment des Servomotors (5) und einem Stellungssignal ($\theta$) des Servomotors (5) grob berechnet ist.

Fig. 1

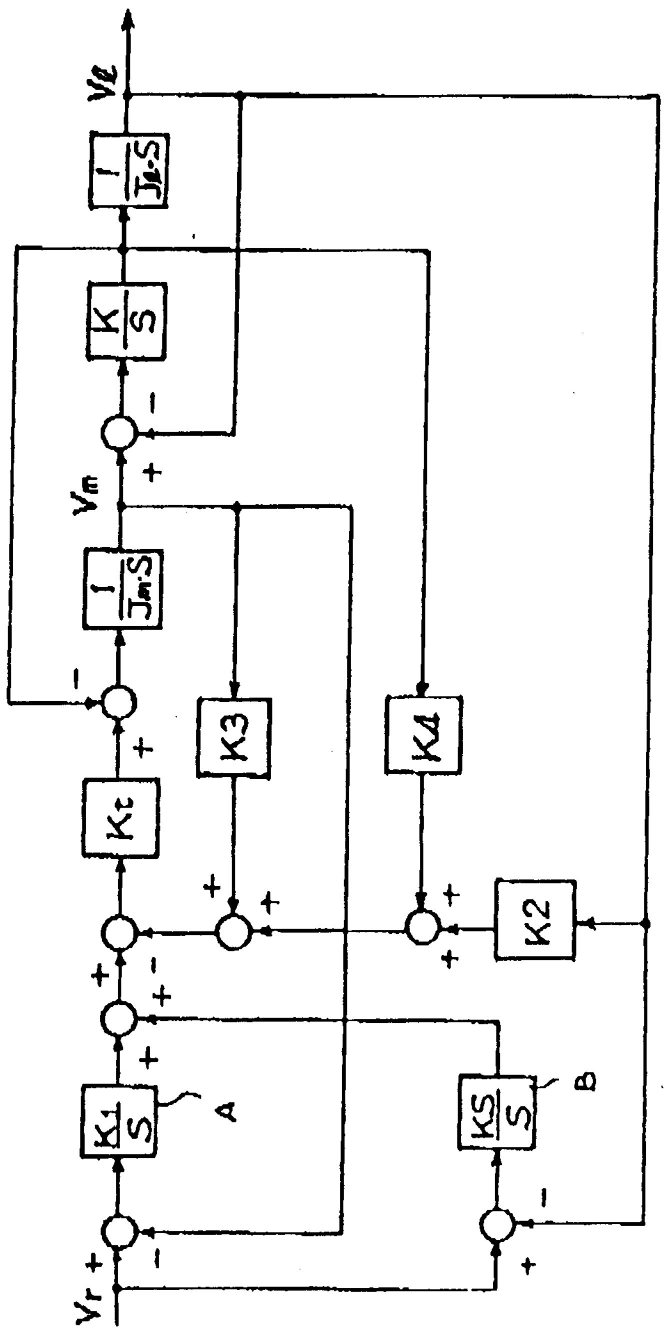

Fig. 2

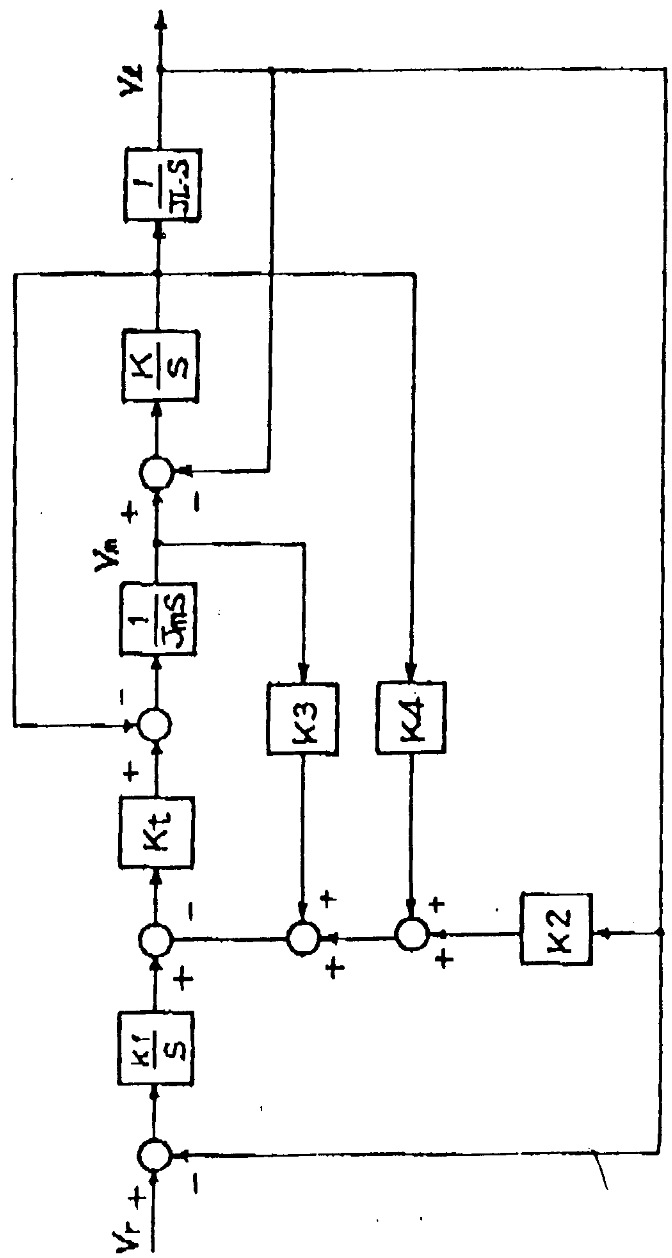

Fig. 3